# EUROPEAN PATENT APPLICATION

(11) **EP 4 531 171 A1**
(43) Date of publication of application: **02.04.2025**
(21) Application number: 24738546.1
(22) Date of filing: 04.01.2024
(51) Int. Cl.: H01M 10/63

(54) **THERMAL MANAGEMENT SYSTEM FOR ENERGY STORAGE BATTERY PACK**

(30) Priority: 04.01.2023 CN 202320015462 U
(71) Applicant: ZHEJIANG ZEEKR INTELLIGENT TECHNOLOGY CO., LTD., Ningbo, Zhejiang 315899 (CN); VIRIDI E-MOBILITY TECHNOLOGY (NINGBO) CO., LTD., Ningbo, Zhejiang 315336 (CN); Zhejiang Geely Holding Group Co., Ltd., Hangzhou, Zhejiang 310051 (CN)
(72) Inventor: XIE, Changhuai, Ningbo, Zhejiang 315000 (CN); YANG, Tonghuan, Ningbo, Zhejiang 315000 (CN); LI, Jia, Ningbo, Zhejiang 315000 (CN); CHEN, Shujuan, Ningbo, Zhejiang 315000 (CN); CHEN, Fei, Ningbo, Zhejiang 315000 (CN); ZHANG, Caiqing, Ningbo, Zhejiang 315000 (CN); WU, Zegang, Ningbo, Zhejiang 315000 (CN); LAI, Qixiao, Ningbo, Zhejiang 315000 (CN); YU, Zequn, Ningbo, Zhejiang 315000 (CN); ZHAO, Dandan, Ningbo, Zhejiang 315000 (CN); LI, Quanyi, Ningbo, Zhejiang 315000 (CN)
(74) Representative: Dai, Simin
(86) International application number: PCT/CN2024/070681
(87) International publication number: WO 2024/146615

(57) **Abstract**

A thermal management system for an energy storage battery pack includes energy storage battery packs and temperature control sub-units. Each energy storage battery pack includes battery modules and a main housing used for accommodating the battery modules; the temperature control sub-units are mounted on the energy storage battery packs, respectively; each temperature control sub-unit includes a speed regulation fan used for dissipating heat for the energy storage battery pack, a temperature detector used for sensing a temperature of the battery modules and a pulse width modulation (PWM) controller; the speed regulation fan, the temperature detector and the PWM controller of one of the temperature control sub-units are in signal connection, the PWM controller is used for adjusting the duty ratio of the speed regulation fan according to the difference value between the temperature of the battery modules and a temperature threshold; and the temperature threshold is a preset value.

## Description

The present patent application claims priority to a Chinese application filed on January 4, 2023, with application number 202320015462.5, whose applicants are Zhejiang ZEEKR Intelligent Technology Co., Ltd., Viridi E-Mobility Technology (Ningbo) Co., Ltd., and ZHEJIANG GEELY HOLDING GROUP CO., LTD., and title is "Thermal Management System for Energy Storage Battery Pack". The entire text of which is incorporated herein by reference in its entirety.

### TECHNICAL FIELD

The present disclosure relates to the technical field of energy storage systems, in particular, to a thermal management system for an energy storage battery pack.

### BACKGROUND

An energy storage system generally refers to a device assembly capable of reasonably utilizing energy and increasing the energy utilization, and collecting and storing the temporarily unused energy in some manner for reuse. At present, in an energy storage system, using the fan to dissipate heat is the most common heat dissipating method in the industry, which has the advantages of simple structure, low price, mature and reliable technology, and the like, so that it is widely applied.

### SUMMARY

### TECHNICAL PROBLEM

A set of energy storage system with a power above the MWh (megawatt) level and using the fans to dissipate heat inevitably has a large number of fans, and all fans usually use the same set of control parameters, specifically, when the fans are turned on and off, the fans corresponding to the battery boxes with the high temperature and with the low temperature are controlled to operate using the same parameter. Therefore, the problems of high energy consumption, large fan noise, short fan service lifetime and the like of the energy storage system are generated; and the defects of uneven heat dissipation of the battery of the energy storage system, large temperature difference between the battery and the battery pack and the like exist. Uneven heat dissipation and relatively large temperature difference will both result in that the service lifetime of the battery and the battery pack is reduced, and thus the system stability and the economic benefit are affected.

### TECHNICAL SOLUTION

In view of this, the present disclosure provides a thermal management system for an energy storage battery pack that enables the temperature of batteries in an energy storage system to be approximately consistent and can prolong the service lifetime of the batteries and the battery pack.

According to the present disclosure, a thermal management system for an energy storage battery pack includes a plurality of energy storage battery modules and a plurality of temperature control sub-units; wherein each of the energy storage battery packs includes a plurality of battery modules and a main housing used for accommodating the battery modules; the temperature control sub-units are mounted on the energy storage battery packs, respectively; each of the temperature control sub-units includes a speed regulation fan used for dissipating heat for the energy storage battery pack, a temperature detector used for sensing a temperature of the battery modules and a pulse width modulation (PWM) controller; the speed regulation fan, the temperature detector and the PWM controller of one of the temperature control sub-units are in signal connection, the PWM controller is used for, according to a difference value between the temperature of the battery modules and a temperature threshold, adjusting the duty ratio of the speed regulation fan; and the temperature threshold is a preset value.

Further, the energy storage battery pack further includes a cooling air duct disposed in the main housing, the speed regulation fan is disposed at one end of the cooling air duct and is in communication with the cooling air duct, and the battery modules are disposed at both sides of the cooling air duct.

Further, the temperature detector is attached to the battery modules as a whole, and the temperature detector is used for sensing a temperature of the battery modules attached to the temperature detector and send the temperature to the PWM controller.

Further, the PWM controller is in signal connection with the speed regulation fan in the same battery module as the PWM controller, and the PWM controller is configured to, through controlling the duty ratio of the speed regulation fan in the same battery module as the PWM controller, enable the temperature of the battery modules to approach the temperature threshold.

Further, the PWM controller is in signal connection with the temperature detector in the same battery module as the PWM controller, and the PWM controller is used for, according to a temperature of the battery modules attached to the temperature detector and the temperature threshold, adjusting the duty ratio of the speed regulation fan.

Further, the PWM controller is further used for, in response to that a difference value between the temperature of the battery modules and the temperature threshold is less than or equal to a first difference value, adjusting the duty ratio of the speed regulation fan at a first duty ratio preset value; and the PWM controller is further used for, in response to that the difference value between the temperature of the battery modules and the temperature threshold is less than or equal to a second difference value, adjusting the duty ratio of the speed regulation fan at a second duty ratio preset value; where the first difference value, the second difference value, the first duty ratio preset value and the second duty ratio preset value are all preset values, and the second difference value is greater than the first difference value.

Further, the speed regulation fan is a PWM fan.

Further, the speed regulation fan is an energy storage temperature control fan.

Further, the thermal management system for the energy storage battery pack further includes a plurality of battery clusters; where each of the battery clusters includes the energy storage battery packs; the temperature control sub-units in each of the battery clusters are in signal connection through a plurality of sub-control boxes; the sub-control boxes are in signal connection through a master control box; and the master control box is used for controlling all the temperature control sub-units through the sub-control boxes, to make duty ratios of all the speed regulation fans are not completely the same.

Further, the thermal management system for the energy storage battery pack further includes a master control box, the plurality of sub-control boxes are in signal connection through the master control box, the master control box includes an electrical control system that is used for controlling the temperature control sub-unit to sense the temperature of the battery modules by taking a temperature detection interval as a period, and the temperature detection interval is a preset value.

### BENEFICIAL EFFECTS

According to the thermal management system for the energy storage battery pack, each energy storage battery pack is respectively controlled through the energy storage battery pack and the temperature control sub-unit disposed on the energy storage battery pack, so that each energy storage battery pack can independently and autonomously dissipate heat according to the temperature of the battery modules in the energy storage battery pack without being influenced by the cooling strategy of any other energy storage battery pack; and while the temperature of the whole energy storage system tends to be uniform, the unnecessary fan loss is reduced, the master energy consumption of the energy storage system is decreased, the service lifetime of the speed regulation fan is prolonged, and the noise of the speed regulation fan is reduced.

### BRIEF DESCRIPTION OF THE DRAWINGS

FIG. 1 is a schematic diagram of a thermal management system for an energy storage battery pack according to the present disclosure.
FIG. 2 is a schematic flowchart of controlling a temperature of the battery modules for an energy storage system according to the present disclosure.
FIG. 3 is a schematic diagram of a temperature control sub-unit according to the present disclosure.

### DETAILED DESCRIPTION

To further describe the technical means and effects adopted by the present disclosure to achieve the intended purposes, the present disclosure is described in detail below with reference to the accompanying drawings and embodiments.

The terms "first," "second," "third," "fourth," and the like in the specification and claims of the present disclosure are used to distinguish similar objects, and are not used to describe a specific order or sequence.

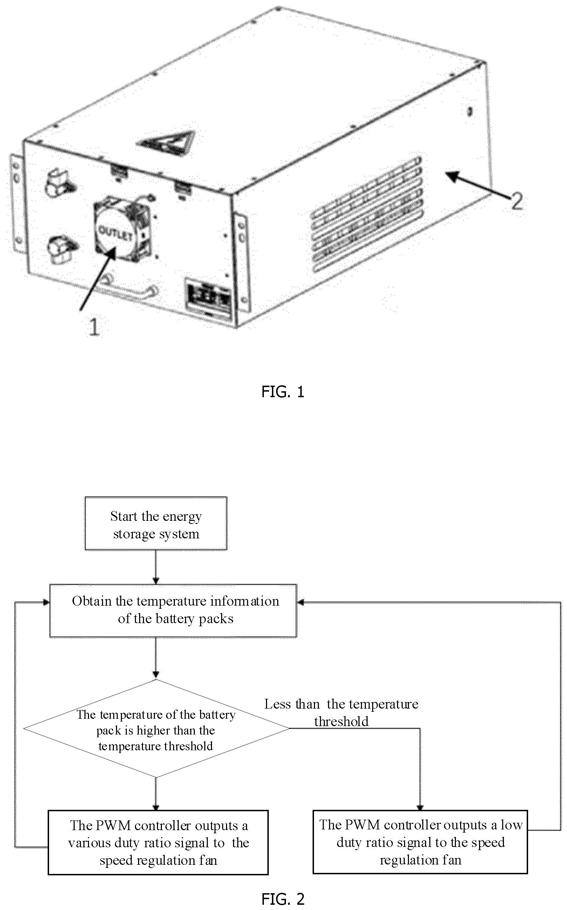

Referring to FIGs. 1 to 3, the thermal management system for an energy storage battery pack according to the present disclosure includes a plurality of energy storage battery packs 2 and temperature control sub-units. The energy storage battery pack 2 includes a plurality of battery modules and a main housing used for accommodating the battery modules. The temperature control sub-units are mounted on the energy storage battery packs 2, respectively; and the temperature control sub-unit includes a speed regulation fan 1 used for dissipating heat for the energy storage battery pack 2, a temperature detector used for sensing the temperature of the battery modules, and a pulse width modulation (PWM) controller. Specifically, the speed regulation fan 1, the temperature detector, and the PWM controller of one of the temperature control sub-units are in signal connection and are all disposed on one energy storage battery pack 2. The temperature detector can sense the temperature of the battery modules in the same energy storage battery pack 2, and the PWM controller can adjust the duty ratio of the speed regulation fan 1 according to the difference value between the temperature of the battery modules and the preset temperature threshold. In this embodiment, the temperature threshold is 30 °C. If the temperature detector senses that the temperature of the battery modules is higher than the temperature threshold, the PWM controller outputs a high duty ratio signal to increase the rotational speed of the speed regulation fan 1, so that the temperature of the battery modules approaches the temperature threshold 30 °C. Otherwise, if the temperature detector senses that the temperature of the battery modules is less than the temperature threshold, the PWM controller outputs a low duty ratio signal to decrease the rotational speed of the speed regulation fan 1, so that the temperature of the battery modules approaches the temperature threshold 30 °C. In particular, the PWM controller in the present disclosure is only in signal connection with the speed regulation fan 1 disposed at the same energy storage battery pack 2, and this PWM controller only correspondingly controls the speed regulation fan 1 disposed at the same energy storage battery pack 2. The temperature detector only correspondingly senses the battery modules disposed at the same energy storage battery pack 2. That is, any one energy storage battery pack 2 in the thermal management system for the energy storage battery pack of the present disclosure can, according to its own cooling strategy, that is, the temperature of the battery modules, perform the independent and autonomous heat dissipation without being affected by the cooling strategy of any other energy storage battery pack 2, which reduces unnecessary fan losses while making the temperature of the entire energy storage system tend to be uniform.

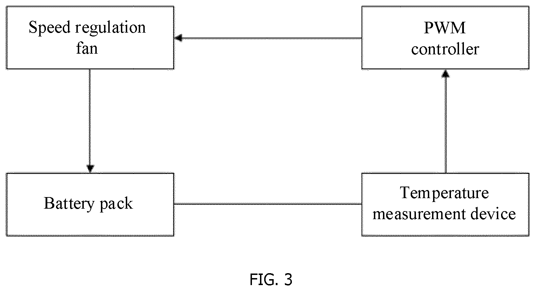

Referring to FIGs. 2 and 3, further, the temperature detector in the present disclosure is attached to the battery modules, and the temperature detector is used for sensing a temperature of the battery modules attached to this temperature detector and sending the temperature to the PWM controller. The PWM controller is in signal connection with the speed regulation fan 1 for the same battery module as the PWM controller, and the PWM controller can control the duty ratio of the speed regulation fan 1 for the same battery module as the PWM controller, to enable the temperature of the battery modules to approach the temperature threshold. The PWM controller is in signal connection with the temperature detector for the same battery module as the PWM controller, and the PWM controller is used for adjusting the duty ratio of the speed regulation fan 1 according to the temperature threshold and the temperature of the battery modules attached to the temperature detector. In this embodiment, the temperature threshold of the speed regulation fan 1 is a preset value. Therefore, the initial duty ratio of the speed regulation fan 1 is also a preset value. Further, the PWM controller further presets the duty ratio preset values corresponding to the speed regulation fan 1 at different temperatures; the PWM controller is further used for adjusting the duty ratio of the speed regulation fan at a first duty ratio preset value when the difference value between the temperature of the battery modules and the temperature threshold is less than or equal to a first difference value; and the PWM controller is further used for adjusting the duty ratio of the speed regulation fan at a second duty ratio preset value when the difference value between the temperature of the battery modules and the temperature threshold is less than or equal to a second difference value. The first difference value, the second difference value, the first duty ratio preset value, and the second duty ratio preset value are all preset values. In this embodiment, the second difference value is greater than the first difference value. The temperature control sub-unit in the present disclosure can adjust the cooling strategy of any one energy storage battery pack 2 by adjusting the preset parameters, such as the first duty ratio preset value, the second duty ratio preset value, the first difference value, and the second difference value. The system operation logic is reasonable, and the cost is easy to control.

Further, the energy storage battery pack 2 further includes a cooling air duct disposed in the main housing. The speed regulation fan 1 is disposed at one end of the cooling air duct and is in communication with the cooling air duct, and the battery modules are disposed at both sides of the cooling air duct. Specifically, the speed regulation fan 1 is fixed on the main housing and faces the cooling air duct. The PWM controller is directly connected with the temperature detector in the main housing through the harness. The PWM controller is integrated with the speed regulation fan 1 as a whole, and the speed-regulating fan 1 draws air from the cooling air duct during the operation, thereby taking away the heat of the batteries located at both sides of the cooling air duct. In other embodiments, the cooling air duct can also be arranged around the battery modules in other forms according to the number of the battery modules in the energy storage battery pack 2, as long as it's ensured that the air medium circulates and air cooling heat dissipation can be performed. The speed regulation fan in the present disclosure can be a PWM fan or an energy storage temperature controlling fan. The PWM fan has the characteristics of simple control and low cost, and the energy storage temperature controlling fan has better load performance.

Further, the thermal management system for the energy storage battery pack of the present disclosure further includes a master control box and sub-control boxes, and battery cluster(s) formed by connecting the plurality of energy storage battery packs 2. A single battery cluster includes a plurality of energy storage battery packs 2. The temperature control sub-units in the single battery cluster are connected through the sub-control box signal, the plurality of sub-control boxes are connected through the master control box signal, and the master control box signal is used for controlling all the temperature control sub-units through the sub-control boxes, so that the duty ratio of the speed regulation fan corresponding to each temperature control sub-unit is not completely the same.

In an embodiment of the present disclosure, the thermal management system for the energy storage battery pack of the present disclosure is applied to a 40-foot container energy storage system, in which a total of 256 energy storage battery packs 2 are disposed, correspondingly, 256 speed regulation fans 1 are respectively mounted on the energy storage battery packs 2 and the speed regulation fan 1 only dissipates heat for the corresponding energy storage battery pack 2, and in each energy storage battery pack 2, the temperature detector for independently sensing the temperature of the battery modules is correspondingly provided. During the actual operation of the energy storage system, 256 temperature detectors respectively, sense temperatures of battery modules in 256 energy storage battery packs 2, and 256 speed regulation fans 1, respectively operate at the duty ratios that are not all the same under the control of 256 PWM controllers; this is due to the fact that the battery pack temperatures in the energy storage system may not necessarily be the same at any moment. Therefore, the heat dissipation requirements of each energy storage battery pack 2 may not necessarily be the same at any moment.

In another embodiment of the present disclosure, 10 battery clusters are connected to form one energy storage system; each battery cluster includes 15 energy storage battery packs 2; in each energy storage battery pack 2, the speed regulation fan 1, the PWM controller and the temperature detector are correspondingly provided; each battery cluster, through one sub-control box, controls the temperature control sub-unit to start and stop; and the 10 sub-control boxes, through the master control box and the corresponding electrical control system, is controlled to start and stop. During the actual operation of the energy storage system, the temperature of each energy storage battery pack 2 in each battery cluster may not necessarily be the same at any moment, so that the heat dissipation requirement of each energy storage battery pack 2 at any moment may also not necessarily be the same at any moment; the temperature detectors respectively sense the temperature of the battery modules in the energy storage battery packs 2; the speed regulation fans 1, under the control of the PWM controllers, respectively operate at respective duty ratios which not necessarily identical, but all the PWM controllers can, under the control of the master control box and the corresponding electric control system, such as, Body Control Module (BCM), sense the temperature of the battery modules by taking the temperature detection interval as a period, and respectively adjust the duty ratio of the corresponding speed-regulating fan 1 at the same moment.

The thermal management system of the energy storage battery pack of the present disclosure is used to perform the thermal management on any one of the foregoing energy storage systems when the energy storage system starts. Then, the temperature detector in the temperature control sub-unit first senses the temperature of the battery modules. Then, the PWM controller compares the temperature of the battery modules with the temperature threshold, and during the comparison, the PWM controller first compares the temperature of the battery modules with the temperature threshold, and then calculates the difference value between the temperature of the battery modules with the temperature threshold. When the PWM controller compares the temperature of the battery modules with the temperature threshold, in response to that the temperature of the battery modules being greater than the temperature threshold, the PWM controller outputs a high duty ratio signal to increase the rotation speed of the speed regulation fan, so that the temperature of the battery modules approaches the temperature threshold; and in response to that the temperature of the battery modules is less than the temperature threshold, the PWM controller outputs a low duty ratio signal to decrease the rotation speed of the speed regulation fan. When the PWM controller respectively compares the difference value with the preset first difference value and the preset second difference value, in response to that the difference value between the temperature of the battery modules and the temperature threshold is less than or equal to the first difference value, the PWM controller adjusts the duty ratio of the speed regulation fan according to the first duty ratio preset value; and in response to that the difference value between the temperature of the battery modules and the temperature threshold is less than or equal to the second difference value, the PWM controller adjusts the duty ratio of the speed regulation fan according to the second duty ratio preset value. The PWM controller finally adjusts the duty ratio of the speed regulation fan according to the comparison result and the calculation result between the temperature of the battery modules and the temperature threshold to adjust the temperature of the battery modules. No matter how many battery clusters and energy storage battery packs are contained in the energy storage system, each energy storage battery pack follows the aforementioned controlling method to perform the thermal management.

In conclusion, the thermal management system for the energy storage battery pack of the present disclosure, through the energy storage battery pack and the temperature control sub-unit disposed thereon, controls each energy storage battery pack individually, so that each energy storage battery pack can independently and autonomously dissipate heat according to the temperature of the battery modules therein without being affected by the cooling strategy of any other energy storage battery pack; and while homogenizing the temperature of the entire energy storage system, the unnecessary fan losses is reduced, the overall energy consumption of the energy storage system is decreased, the service lifetime of the speed regulation fan is prolonged, and further the noise of the speed regulation fan is reduced.

The above are only specific embodiments of the present disclosure, but the protection scope of the present disclosure is not limited thereto, and any person skilled in the art may easily conceive variations or substitutions within the technical scope disclosed by the present disclosure, which should be covered within the protection scope of the present disclosure. Therefore, the protection scope of the present disclosure shall be defined by the protection scope of the claims.

## Claims

1. A thermal management system for an energy storage battery pack, comprising:
a plurality of energy storage battery packs (2) and a plurality of temperature control sub-units; wherein each of the energy storage battery packs (2) comprises a plurality of battery modules and a main housing configured to accommodate the battery modules; the plurality of temperature control sub-units are mounted on the energy storage battery packs (2), respectively, each of the temperature control sub-units comprises:
a speed regulation fan (1) configured to dissipate heat for the energy storage battery pack (2);
a temperature detector configured to sense a temperature of the battery modules; and
a pulse width modulation (PWM) controller; the speed regulation fan (1), the temperature detector and the PWM controller of one of the temperature control sub-units are in a signal connection, the PWM controller is configured to, according to a difference value between the temperature of the battery modules and a temperature threshold, adjust a duty ratio of the speed regulation fan (1); and the temperature threshold is a preset value.

2. The thermal management system of claim 1, wherein
each of the energy storage battery packs (2) further comprises a cooling air duct disposed in the main housing;
the speed regulation fan (1) is disposed at one end of the cooling air duct and is in communication with the cooling air duct; and
the battery modules are disposed at both sides of the cooling air duct.

3. The thermal management system of claim 1, wherein
the temperature detector is attached to the battery modules as a whole; and
the temperature detector is configured to sense the temperature of the battery modules attached to the temperature detector, and send the temperature to the PWM controller.

4. The thermal management system of claim 3, wherein
the PWM controller is in the signal connection with the speed regulation fan (1) in a same battery module as the PWM controller; and
the PWM controller is configured to, through adjusting the duty ratio of the speed regulation fan (1) in the same battery module as the PWM controller, enable the temperature of the battery modules to approach the temperature threshold.

5. The thermal management system of claim 4, wherein
the PWM controller is in the signal connection with the temperature detector in the same battery module as the PWM controller; and
the PWM controller is configured to, according to the temperature of the battery modules attached to the temperature detector and the temperature threshold, adjust the duty ratio of the speed regulation fan (1).

6. The thermal management system of claim 1, wherein
the PWM controller is further configured to, in response to that the difference value between the temperature of the battery modules and the temperature threshold is less than or equal to a first difference value, adjust the duty ratio of the speed regulation fan at a first duty ratio preset value;
the PWM controller is further configured to, in response to that the difference value between the temperature of the battery modules and the temperature threshold is less than or equal to a second difference value, adjust the duty ratio of the speed regulation fan at a second duty ratio preset value; and
the first difference value, the second difference value, the first duty ratio preset value and the second duty ratio preset value are all preset values, and the second difference value is greater than the first difference value.

7. The thermal management system of claim 1, wherein the speed regulation fan is a PWM fan.

8. The thermal management system of claim 1, wherein the speed regulation fan is an energy storage temperature controlling fan.

9. The thermal management system of claim 1, further comprising:
a plurality of battery clusters, each of the battery clusters comprising the energy storage battery pack (2),
wherein the temperature control sub-units in each of the battery clusters are in a signal connection through a plurality of sub-control boxes;
the sub-control boxes are in a signal connection through a master control box; and
the master control box signal is configured to control all the temperature control sub-units through the sub-control boxes, to make duty ratios of all the speed regulation fans are not completely the same.

10. The thermal management system of claim 9, wherein the master control box comprises an electrical control system configured to control the temperature control sub-unit to sense the temperature of the battery modules by taking a temperature detection interval as a period, and the temperature detection interval is a preset value.
